# EUROPEAN PATENT APPLICATION

(11) **EP 2 740 572 A1**
(43) Date of publication of application: **11.06.2014**
(21) Application number: 13195933.0
(22) Date of filing: 05.12.2013
(51) Int. Cl.: B25J 15/00, B65G 47/90, B65H 3/20, C14B 7/00, C14B 17/06

(54) **Machine for processing leather goods**

(30) Priority: 05.12.2012 IT PD20120364
(71) Applicant: OMAC S.r.l., 35127 Padova (IT)
(72) Inventor: Simonetti, Luca, 35010 Vigonza (PD) (IT); Zanella, Emanuele, 37045 Legnago (VR) (IT)
(74) Representative: Locas, Davide

(57) **Abstract**

A machine for processing leather articles comprises a storage station for a material requiring processing in sheet form, a working area for joining material requiring processing with a portion of leather or other similar material, and a device for transferring the material requiring processing which comprises a pick-up unit to pick up and release the material requiring processing. The pick-up unit comprises an adhesive portion facing the material requiring processing which can be moved towards the material requiring processing in such a way that it comes into contact with it within the storage zone, making it of one piece with the transfer device. Means for detaching the material requiring processing which can be operated under control in the working area are also provided.

## Description

This invention relates to a machine for processing leather goods designed to attach portions of leather to fabrics, for example silk, or other materials in the form of thin sheets.

In the context of the production of particular leather articles, such as for example wallets, key holders and the like, there is a need to attach the leather to a layer of fabric. In this way the leather, which comprises the externally visible material and therefore imparts aesthetic value, is protected internally by the fabric to prevent both the contents within the manufactured article from becoming attached to the leather, such as for example in the case of a holder for credit cards or other plastic cards, and the contents from scratching or wearing out the leather through rubbing it, as occurs for example in a purse.

Attachment of the leather to the fabric, typically through a layer of adhesive, is effected using suitable automatic machines which pick up the individual layers of leather, apply the adhesive to them and finally place them on the fabric.

Known machines are also provided with an internal storage facility containing a plurality of layers of leather and fabric, which are picked up from the storage facility individually through a transfer device. The transfer device therefore alternately picks up leather and fabric to move them to a working area where they are bonded together.

In particular the transfer device initially picks up a layer of leather which is set down in the working area in such a way that a layer of adhesive can be applied to it. As the adhesive is applied the transfer device moves back towards the storage facility where it picks up the fabric to place it on top of the layer of leather with adhesive, thus joining them together.

The leather and fabric are picked up and released through a pneumatic system, which comprises suction/blowing heads brought into contact with leather in the storage facility and have suction applied so that the material is secured to the head through the creation of a vacuum.

However known systems are not very suitable for moving light fabrics with relatively open weaves, such as for example silk.

In fact it must be borne in mind that in the storage facility the fabric is held as overlapping layers and the suction action tends to lift up more than one layer of fabric, as air tends to pass through the weave of the fabric.

As a consequence more than one layer of fabric is brought to the working area, with an unavoidable wastage of material and the possible production of wasters. Also this requires the production process to be unavoidably suspended so that the excess layers of fabric can be removed from the working area and returned to the storage facility.

The technical problem underlying this invention is therefore that of providing a machine for the processing of leather articles designed to overcome all the disadvantages mentioned with reference to the cited known art.

This problem is overcome through a machine for the processing of leather articles according to the principal claim of this patent application. Preferred embodiments of the invention are further described in the dependent claims.

The main advantage of the machine according to this invention lies in the fact that it can pick up layers of fabric, and in general products in the form of thin layers having an open weave, individually, without thereby running the risk of carrying more than one layer of product to the area intended for bonding it to the leather.

The risk of interruptions in the production process due to the presence of excess layers of fabric in the working area is thus avoided.

Further features and advantages of the invention will be more apparent from the detailed description of some of its embodiments illustrated indicatively and without limitation with reference to the appended drawings in which:
- Figure 1 is a perspective view illustrating a machine for processing leather articles according to this invention;
- Figure 2 is a perspective view illustrating the transfer device, a detail of the machine in Figure 1;
- Figure 2A is a perspective view of a pick-up unit, a detail in Figure 2;
- Figures 3 and 3A are a front view and a corresponding cross-section respectively of the pick-up unit in Figure 2A;
- Figures 4 and 4A are a plan view and a lateral cross-section respectively of the pick-up unit in Figure 2A;
- Figure 5 is an exploded perspective view of the pick-up unit in Figure 2A;
- Figures 6A to 6D are front views of the pick-up unit in Figure 2A which illustrate its operation; and
- Figures 7A to 7C are a side view, a front view and a relative cross-section respectively of a further embodiment of the pick-up unit in the machine according to this invention.

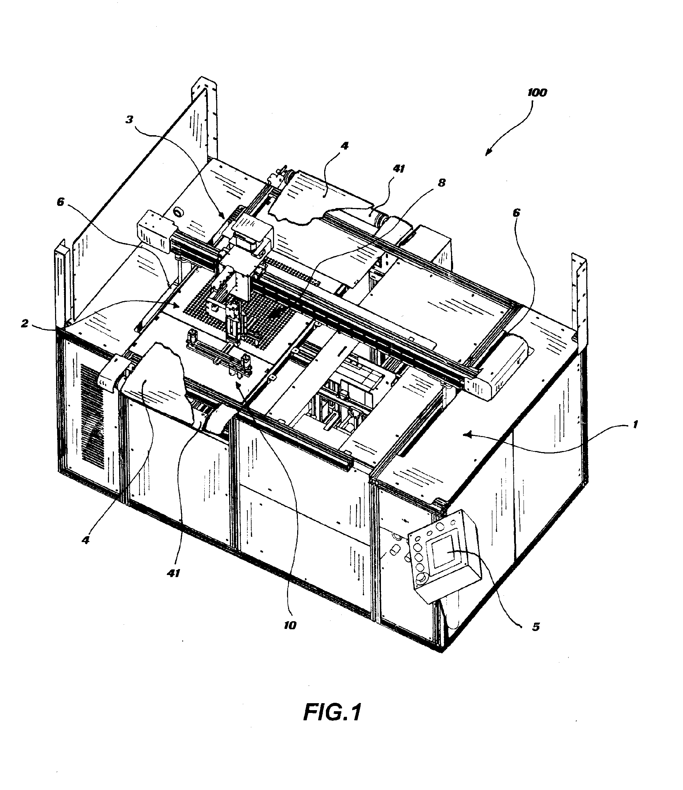

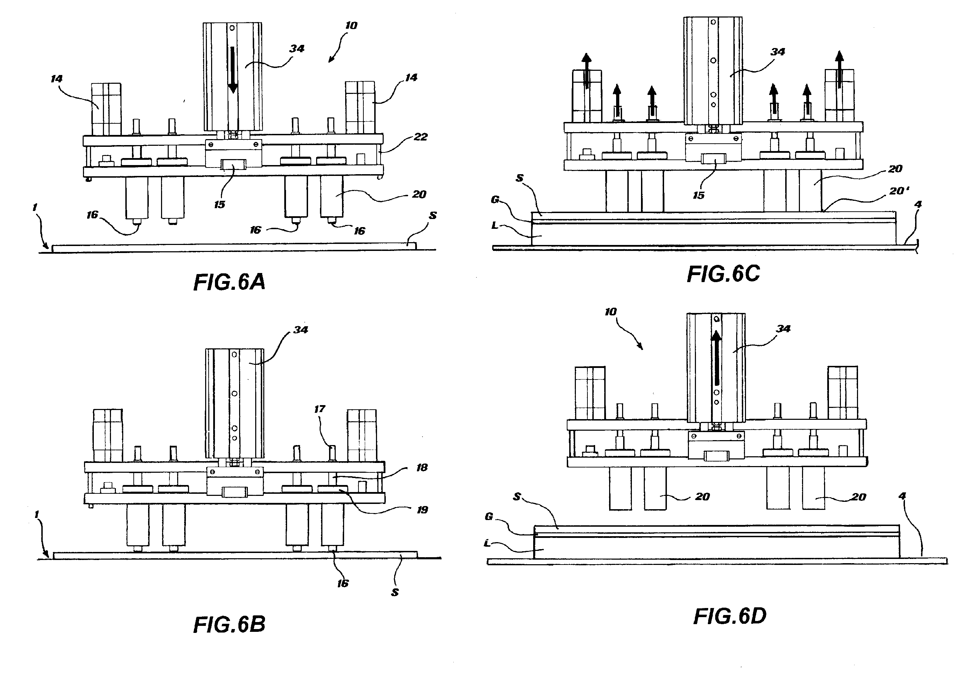

With reference initially to Figure 1, a machine for processing leather articles is indicated as a whole by the reference number 100. Machine 100 comprises a storage station 1, which is only partly illustrated in the figure, within which portions of leather and the material being processed are stored. Specifically, as will be described in greater detail below, and as illustrated diagrammatically in Figures 6A to 6D, in the present embodiment machine 100 is designed to join portions of leather L with a layer of fabric S, for example silk, through adhesive bonding. Storage station 1 is therefore designed to contain both the materials arranged in corresponding stacks, and to make them available individually in a corresponding pick-up zone. It is obvious that the leather portions will not necessarily be made of natural leather, but may also be made of synthetic materials, for example plastics, having characteristics which are similar to or at least have common features with leather. In the same way the fabric may also be replaced by other thin sheet products having at least a relatively open weave.

Storage station 1 is however of the conventional type and as a consequence it will not be illustrated in greater detail below.

Again with reference to Figure 1, machine 100 further comprises a device 3 for transferring the material requiring processing S and leather portions L which enables them to move from storage station 1 to a working area 2 in which the material requiring processing S is joined to a portion of leather L through a layer of an adhesive substance G. This adhesive bonding stage takes place in a conventional way and for this reason will not be illustrated in greater detail.

In working area 2 machine 100 further has a belt 4 supported by rollers 41 designed to support the leather and fabric portions during the aforesaid adhesive bonding stage and to move the leather article once the materials have been joined. Below belt 4 machine 100 also comprises a vessel, not illustrated in the figure, connected to an aspirator through which excess droplets of sprayed adhesive can be sucked out through a grille 8 and which also helps to hold the portions of leather still during the stage in which adhesive is sprayed.

Transfer device 3 also supports a pick-up unit 10, through which the leather and the fabric can be picked up and released under control.

More specifically the machine comprises a control panel 5 through which a working program can be defined, thus controlling the movement of transfer device 3 and the activation of pick-up unit 10.

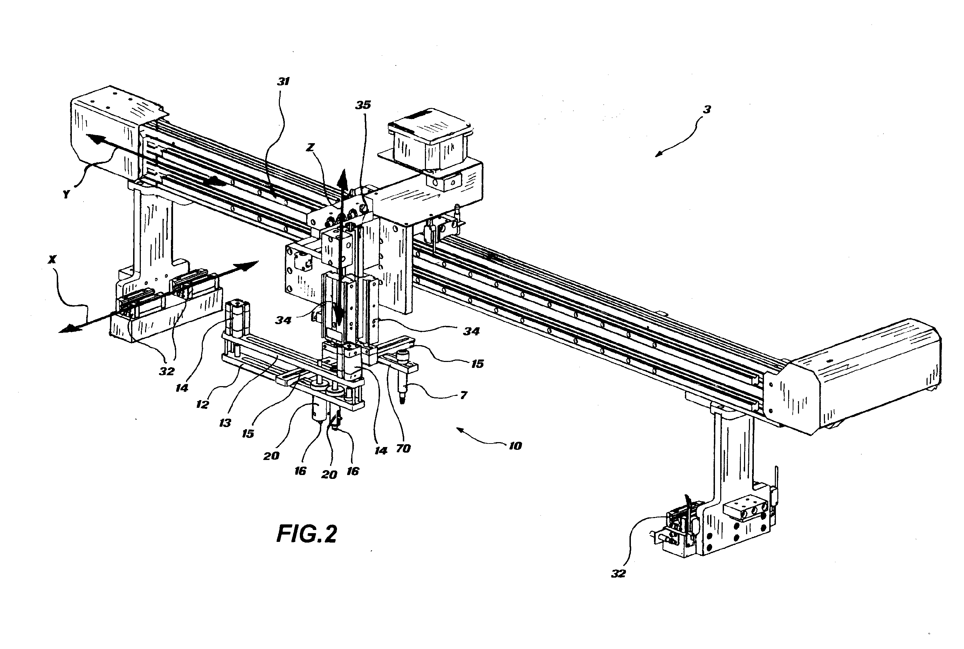

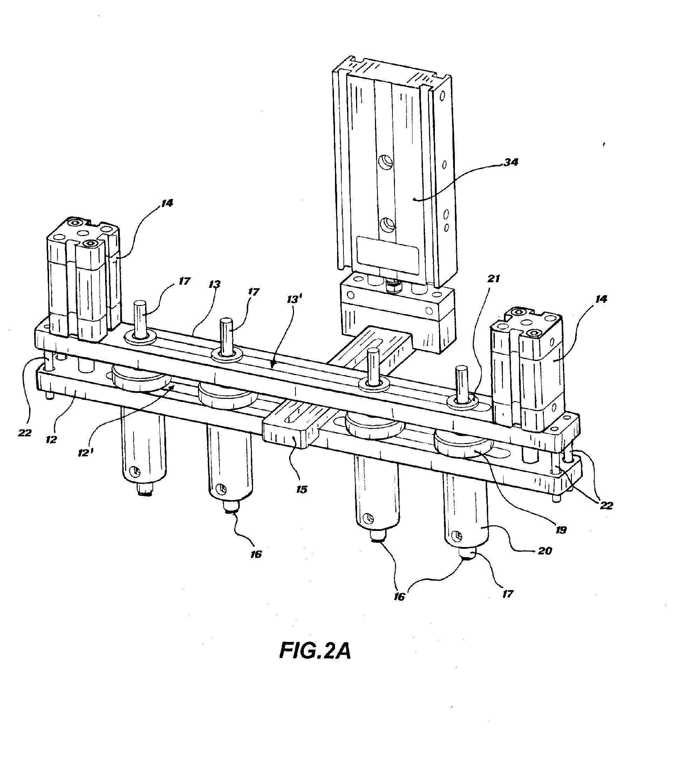

With reference now to Figure 2, transfer device 3 comprises a cartesian movement system brought about through two pairs of guides at right angles on which corresponding slides can move in such a way that pick-up unit 10 can be moved above a plane defined by the working area and belt 4. According to a preferred embodiment a first pair of guides 6, which are partly visible in Figure 1, are provided on the machine and a second guide 31 is constructed in the form of a cross-member extending across guides 6. Cross-member 31 is supported on guides 6 by means of slides 32 in such a way that it can be moved along a first direction of movement X. Pick-up unit 10 is also supported on cross-member 31 through another slide which cannot be seen in the figure and can therefore move in a second direction of movement Y perpendicular to the first and defined by the longitudinal extent of cross-member 31. In this way pick-up unit 10 can be moved between storage station 1 and working area 2 by drive means which are not illustrated in the figure.

Furthermore pick-up unit 10 is supported on cross-member 31 by means of two linear actuators of the pneumatic type 35, 35' supported on a profiled upright 34 to permit it to move along a third direction Z perpendicular to the above, towards and away from the plane defining working area 2 and/or a pick-up area in storage station 1.

According to a preferred embodiment pick-up unit 10 makes it possible to pick up leather portions L and material requiring processing S through a corresponding pick-up system. For this purpose pick-up unit 10 comprises at least one suction/blowing head 7 attached to the pneumatic system of the machine, constructed in a conventional way, through which leather portions L can be picked up/released under control and an adhesive portion 16 with corresponding detachment means 20 for picking up and releasing material requiring processing S in a manner which will be described in greater detail below.

Advantageously head 7 and adhesive portion 16 are supported on guide 35 through a corresponding slide 34 in such a way that they can be moved towards/away from working plane 20 independently of each other.

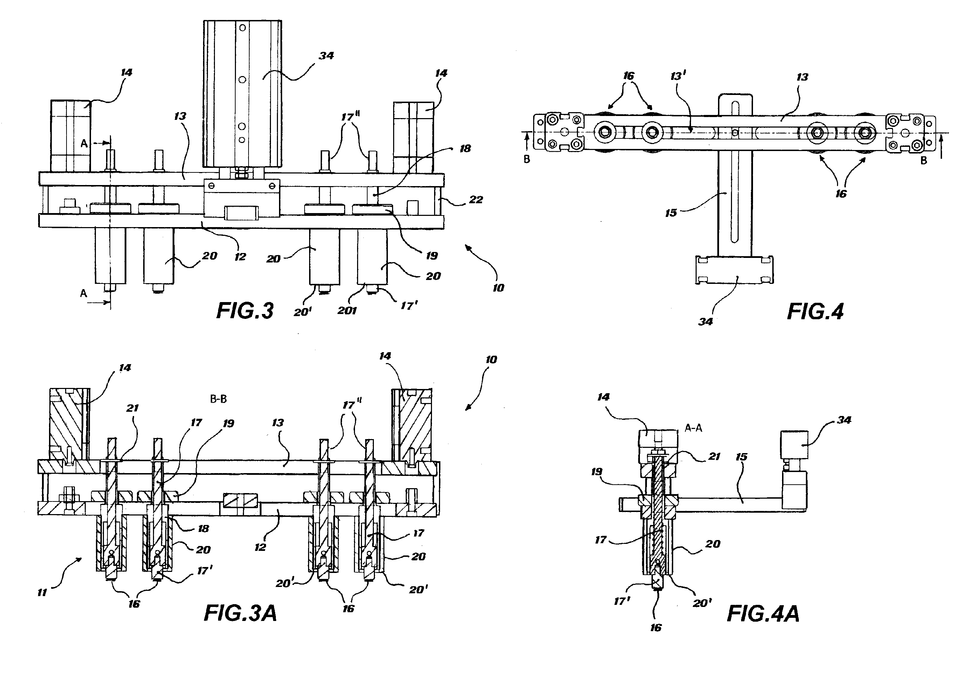

With reference also therefore to Figures 3, 3A, 4 and 4A, pick-up unit 10 has a pair of columns 15, 15' which extend from actuators 35 and 35' respectively, on the first 15 of which there is supported at least one support 17 for adhesive portion 16.

In this embodiment support 17 is slidably attached to a cross-member 12 which is of one piece with column 15 through a securing bush 18. In more detail bush 18 is attached to cross-member 12 in a longitudinal seat 12' by means of a securing nut 19 and support 17 is housed in a slidable manner within the bush.

Again according to a preferred embodiment support 17 is in the form of a column and has a movable extremity 17' to which the adhesive portion is attached.

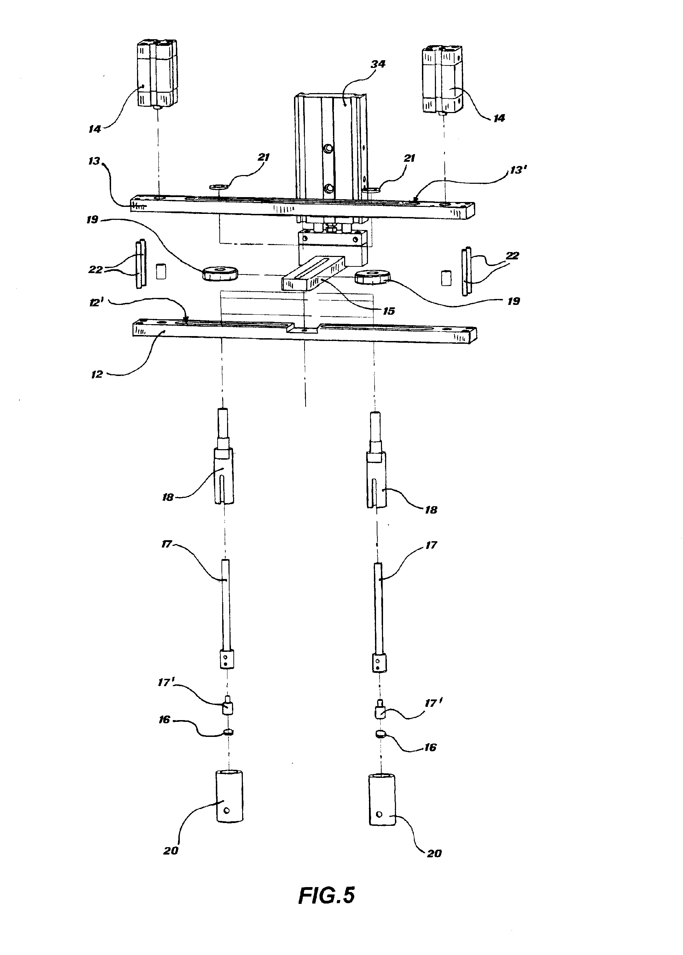

As may better be seen in Figure 5, adhesive portion 16 is in the form of an adhesive layer which has adhesive material on both surfaces. In this way, and also thanks to the possibility of removing extremity 17', adhesive portion 16 may be easily replaced when its adhesive capacity for fabric S is diminished, for example through the build-up of dust or other impurities.

It is also known that, by way of example, adhesive portion 16 may take the form of a two-sided adhesive material of the Avery Dennison™ FT 7378H type produced by the Avery Dennison Corporation.

In any event a person skilled in the art will be able to choose the correct type of adhesive portion on the basis of the specific application required.

A second extremity 17" of column 17 is instead immobilised on a further cross-member 13 standing above cross-member 12 and of one piece with upright 34. In this embodiment cross-member 13 also has a longitudinal seat 13' along which column 17 moves and is immobilised in at least one direction through a locking ring 21.

A pair of pneumatic actuators 14 attached to cross-member 13, or other equivalent drive system, makes it possible to move the two cross-members 12 and 13 towards/away from each other, thus causing column 17 to move in corresponding bush 18.

In this way adhesive portion 16 can be carried on the outside or inside respectively of a cylindrical carrier 20 located externally to bush 18 and attached to cross-member 12 in an opposite direction with respect to second cross-member 13.

With reference therefore to Figures 6A to 6B, the functioning of pick-up unit 10 while picking up and setting down fabric S in the machine according to this invention will now be illustrated below.

Pick-up unit 10 is positioned in relation to fabric S in storage area 1 with the adhesive portions located externally on carriers 20.

By means of slide 34 unit 10 is moved along the Z axis in a direction approaching fabric S until the adhesive portion comes into contact with it inside storage area 1. The action of adhesive portion 16 therefore makes it possible to make fabric S of one piece with pick-up unit 10 and therefore with transfer device 3.

In this way pick-up unit 10 can be raised again and through transfer device 3 fabric S can be moved to working area 2 where leather portion L to which a layer of adhesive G has been applied has already been located.

The pick-up unit is lowered again so that fabric S rests on leather portion L, thus bringing about joining.

In order to detach fabric S from adhesive portions 16 columns 17 are raised through the movement of upper cross-member 13, pulling adhesive portion 16 within cylindrical carrier 20.

In this way fabric S is moved towards a contact edge 20' of cylindrical carrier 20 immobilising it on belt 4 and permitting adhesive portion 16 to be detached through a further movement of it away from fabric S. In other words, by further withdrawing portion 16 within carrier 20 the fabric is detached from it.

Once detachment has been brought about, pick-up unit 10 may be again raised and moved back by means of transfer device 3 to storage station 1 where it can pick up a further portion of leather L or fabric S.

Through the use of an adhesive portion it is therefore possible to pick up a single layer of fabric S precisely, overcoming the disadvantages associated with the use of conventional pneumatic systems.

Furthermore the use of carrier 20 makes it possible to separate fabric S from adhesive portions 16 in a precise way, preventing these from moving from the position where they bond with leather portion L during the detachment stage.

It is however obvious that different means 20 for detaching material requiring processing S which can be operated under control at workstation 1 may also be provided as an alternative to cylindrical carrier 20.

As in the embodiment described above, these detachment means may be based on the use of other contact members corresponding to carrier 20 with which material requiring processing S comes into contact as a result of a relative parting movement between adhesive portion 16 and the contact member to bring about detachment of material requiring processing S from adhesive portion 16.

As an alternative the use of different detachment means, such as for example obtained by means of blowing air which blows the fabric away from adhesive portions 16, may also be provided. In this respect supports 17 may be provided with a suitable suction/blowing duct connected to the pneumatic system of the machine.

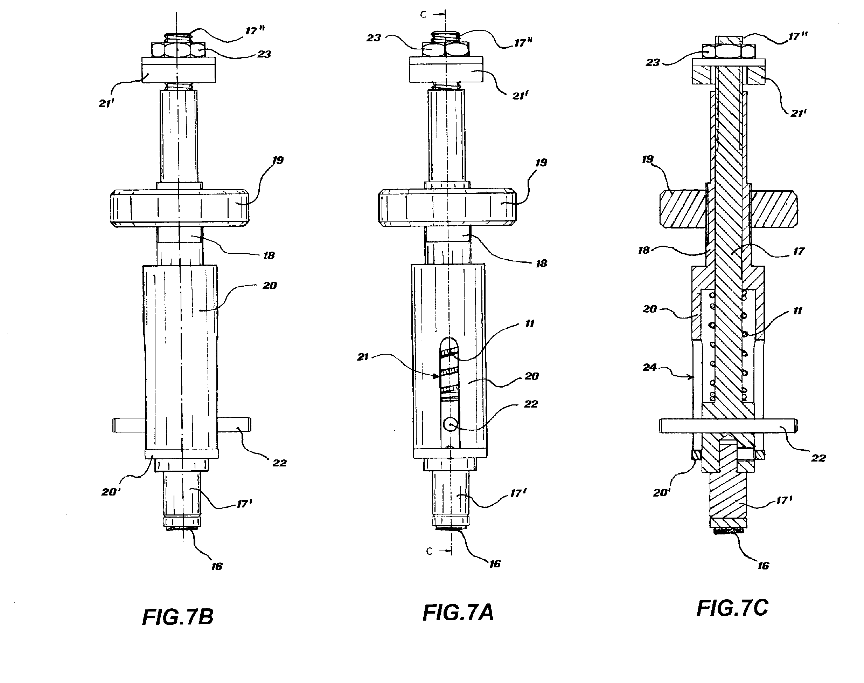

It is to be noted that this embodiment may advantageously make it possible to make use of the same components to both pick up the leather portions through pneumatic action and the fabric through adhesive portions 16. With reference now to Figures 7A to 7C, an alternative embodiment of pick-up unit 10, in particular of contact members 20, is illustrated.

In this embodiment carrier 20 is constructed as a single body with securing bush 18 and is provided with a seat 24 within which is housed a pin 22 of one piece with support 17. Through the attachment between the pin and the seat it is therefore possible to prevent rotation of support 17 and therefore advantageously make use of a nut 23 to adjust the upper end stop for support 17, and therefore adhesive portion 16, during the stage of detachment from fabric S. The lower travel of adhesive portion 16 is instead restricted through contact with a ring 21' and bush 18.

Support 17, again in the form of a column, is also provided with a spring 11 or equivalent resilient member which makes it possible to adjust the contact pressure between adhesive portion 16 and the material in order to assist return of adhesive portion 16 to a position external to carrier 20.

The invention thus resolves the problem stated, while at the same time providing a plurality of advantages. In particular the machine according to this invention makes it possible to move portions of leather or fabric or other woven materials which would normally be picked up with difficulty by pneumatic systems to be moved and positioned with the maximum accuracy. Furthermore the structure of the machine is particularly simple and robust, thus permitting high productivity while requiring a minimum additional number of components in comparison with known machines.

## Claims

1. A machine (100) for processing leather articles, comprising a storage station (1) for a material in sheet form requiring processing (S), a working area (2) for joining the material requiring processing (S) with a portion of leather (L) or other similar material, and a device (3) for transferring the material requiring processing (S) from the storage station (1) to the working area (2), the transfer device (3) further comprising a pick-up unit (10) to pick up and release the material requiring processing (S), **characterised in that** the pick-up unit (10) comprises an adhesive portion (16) facing the material requiring processing (S) in the storage area (1) which can be moved towards the material requiring processing (S) in such a way as to come into contact with the same in the storage area (1), making it of one piece with the transfer device (3) and **in that** it comprises means (20) for detaching the material requiring processing (S) which can be operated under control within the working area (2).

2. A machine (100) for processing leather articles according to claim 1, in which the detachment means comprise a contact member (20) with which the material requiring processing (S) comes into contact following a relative parting movement between the adhesive portion (16) and the contact member (20) detaching the material requiring processing (S) from the adhesive portion (16).

3. A machine (100) for processing leather articles according to claim 1 or 2, in which the said transfer means comprise at least one support (17) which can move in a direction towards/away from the working area (2) and the storage station (1), the adhesive portion being located at one extremity (17') of the support (17).

4. A machine (100) for processing leather articles according to claim 2, in which the adhesive portion is constructed in the form of a layer of adhesive material (16) which is removably attached to the support (17).

5. A machine (100) for processing leather articles according to any one of claims 2 to 4, in which the contact member comprises a cylindrical carrier (20) and in which the support comprises a column (17) located within the cylindrical carrier (20) and capable of moving with respect to the carrier (20) in such a way that when attached to column (17) the material requiring processing (S) comes into contact with an edge (20') of the carrier (20), and is detached.

6. A machine (100) for processing leather articles according to any one of the preceding claims, further comprising a cartesian system of movement (6, 31, 32, 33) to which the transfer device (3) is attached in such a way that it can move over the working area (2).

7. A machine (100) for processing leather articles according to any one of claims 2 to 6, in which the pick-up unit (10) comprises a pair of cross-members (12, 13) which can be moved away under control in a direction (Z) away from the working area (2), and in which the support (17) and the contact member (20) are attached to a corresponding cross-member of that pair.

8. A machine (100) for the processing of leather articles according to any one of the preceding claims, in which the pick-up unit (10) further comprises a pneumatic system (7) for picking up the leather portion from the storage station (1).

9. A machine (100) for processing leather articles according to claim 8, in which the transfer device (10) comprises a further cross-member (70) to support at least one suction/blowing head (7) for the pneumatic system.

10. A machine (100) for processing leather articles according to claim 2, in which the support (17) comprises a suction/blowing duct connected to the pneumatic system.
